# EUROPEAN PATENT SPECIFICATION

(11) **EP 1 345 744 B1**
(45) Date of publication and mention of the grant of the patent: **16.08.2006**
(21) Application number: 01998435.0
(22) Date of filing: 30.11.2001
(51) Int. Cl.: B29C 41/20, B29C 41/04, B65D 77/06, B29L 22/00

(54) **PROCESS FOR MANUFACTURING MULTI-WALLED VESSELS**
VERFAHREN ZUR HERSTELLUNG VON MEHRWANDIGEN GEFÄSSEN
PROCEDE DE FABRICATION DE RECIPIENTS MULTIPAROIS

(30) Priority: 01.12.2000 GB 0029310
(43) Date of publication of application: 24.09.2003
(73) Proprietor: Fairhurst, Clare Edwina, Newark, NG22 0HF (GB); Fairhurst, Paul Alan, Newark, NG22 0HF (GB)
(72) Inventor: BARKER, John Edward, S outh Anston, Sheffield South Yorkshire (GB)
(74) Representative: Loven, Keith James
(86) International application number: PCT/GB2001/005327
(87) International publication number: WO 2002/043938

(56) References cited:
- EP-A- 0 503 253
- WO-A-92/19431
- DE-U- 29 514 518
- FR-A- 1 520 457
- GB-A- 1 058 586
- US-A- 3 663 680
- US-A- 4 280 640

## Description

### Field of the Invention

This invention relates to a process of manufacturing double-walled and multi-walled vessels by plastics moulding.

### Background of the Invention

Double-walled plastics vessels, especially larger containers such as Intermediate Bulk Containers (IBCs) for conveying bulk liquids and powders, are typically formed by moulding two separate plastics bodies and then locating one within the other, or by moulding separate wall components and then assembling these to form a hollow body. Double walls offer practical advantages over single wall constructions, for example, strength with reduced weight, reduced risk of leaking the contents in the event of damage, because the likelihood of penetration of both walls at the same time is less and if such penetration does occur, the outer wall can serve as a bund to hold the spilled contents of the inner container, and thermal insulation.

Published examples of methods of manufacture of double-walled containers include EP-A-0 482 390, which discloses a container in which each double-walled side is manufactured separately by plastics injection moulding and then the complete container is constructed from the various parts. This method of production is somewhat limited, in that the possible shape of the container is dictated by the need for it to be constructed from pre-formed parts. The process disclosed in US-A-4 280 640 involves the production of open ended, double-wall IBCs by rotational plastics moulding, with their lids being formed separately. The main body of the IBC is formed by placing an core tool within an outer moulding tool, with a plastics material therebetween. The resultant product is an integral one-piece double-wall container on to which a separately formed lid is attached. A different approach is disclosed in EP-A-0 640 532 where two separately formed containers, an inner and an outer container, are placed one within another.

US-A-5 169 024 discloses a double-walled rotationally-moulded cylindrical vessel having circumferential ribs. The inner and outer walls are bonded together by the use of a foam filler between the two layers.

US-A-4 158 686 discloses a method of manufacturing a double-walled vessel according to the preamble of independent claims 1 and 2.

### Summary of the Invention

The present invention provides two methods of this general type which are characterised in that the vessel is of rectangular cross-section having adjacent to each corner thereof on each side thereof a pair of said ribs extending longitudinally to enclose said corner therebetween.

The process of rotational moulding is well known in the field of plastics moulding. It involves the use of a mould which is heated and rotated in two planes so that plastics materials, for example powder or microgranules, placed in the mould melt and coat the walls of the mould, which is then cooled whilst continuing rotation to allow the plastics material to harden forming a layer on the inner surface of the mould. While the plastics materials will typically be solids, liquid materials may alternatively be used, for example pvc plastisols and liquid polyurethane materials

The inner container may be formed of a plastics material, such as polyethylene, for example by rotational moulding, or blow moulding.

The inner container is mounted within the rotational mould throughout the moulding process by means of the top opening and, in the case of larger containers, with a separate attachment point such as an outlet pipe moulded into the inner body and located in a suitable aperture in the mould so as to pass through both walls of the completed container. This allows a space to be maintained between the inner and outer container at all other points.

The inner and outer bodies may be joined by means of: projecting members present on the external surface of the inner hollow body; projecting members present on the internal surface of the outer hollow body; or by a combination of both types of member. The projecting members serve both to space the two bodies apart and to reinforce the final vessel, thus providing a more robust product

The inner vessel may be formed with openings therein, for example providing an inlet or outlet connection, and the outer mould may be shaped so as to accommodate said openings.

In the field of rotational moulding it is understood that there is an optimum temperature to which plastics must be heated and that there is an optimum type of rotation necessary to gain the most satisfactory moulding of a plastic. As the plastics cool within the mould they solidify to the desired form, but this process takes time. Coolants, for example cold air, may be supplied to the mould space to effect control of the moulding process and possibly reduce the length of the moulding operation

The intermediate space formed as a result of the process has a number of uses. Firstly it can provide a secondary barrier of protection around the contents of the inner vessel, whereby the result of a breach in one wall does not cause the contents to discharge from the overall vessel. The intermediate space may also filled with insulating materials such as expanded plastics. This may be done during the moulding process, for example by introducing into the space a plastics material with a blowing agent to form a contiguous layer over the outer surface in the space, or subsequently thereto by injecting insulating material. This may be, for example, polyurethane material which expands after injection.

By the use of an inner vessel formed by an earlier application of this process it may be possible to create multi-walled containers where the associated benefits of double-walls are augmented further.

The exterior of the outer container could be shaped, via the moulding tool, so as to make it stackable, and/or to make the container easier to handle, for example giving forklift ports or carry handles.

The invention could be applied to produce double-walled vessels with numerous applications. As has been previously mentioned Intermediate Bulk Containers (IBCs) are a typical application. However, other possibilities might include fuel tanks whereby the intermediate space could be insulated to maintain the fuel's temperature, or supplied with warm air or exhaust gases to reduce fuel viscosity, or prevent it freezing, in low temperature conditions.

Another potential use of the product could be for food storage containers with either a cold or a warm environment maintained as desired by the passage of refrigerated or heated air or other fluid through the space between the walls.

The invention could be used to manufacture floats, buoys and the like, in which only the space between the walls need be filled with plastics foam or the like, the inner body being simply filled with air. This would effect significant savings in the cost of floats for two reasons. Firstly, the amount of costly expanded plastics material used can be greatly reduced, and secondly, since air is more buoyant than expanded plastics material, the overall size of the float or buoy can be reduced for the same equivalent buoyancy as a foam-filled buoy or float.

Further embodiments of the invention are defined in the dependent claims.

### Brief Description of the Drawings

In the drawings, which illustrate exemplary embodiments of the process of the invention:
Figure 1 is a part-sectional diagram illustrating a rotational mould with the inner body located therein; and
Figures 2, 3 and 4 are respectively part-sectioned front and side elevations and top plan view of an IBC manufactured in accordance with the process of the invention.

### Detailed Description of the Illustrated Embodiments

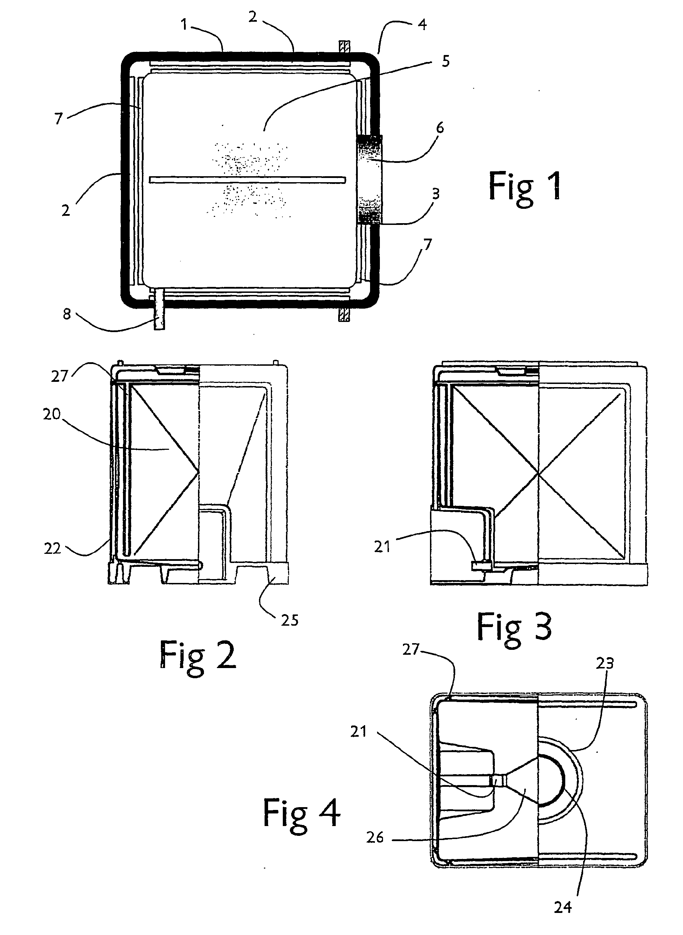

Referring first to Figure 1, the rotational mould 1 is illustrated as a steel enclosure having internal ribs 2 on each side thereof, and an opening 3 in one side, which is formed as a removable lid 4. The inner hollow body 5 defining the inner walls of the double-walled vessel has been moulded by rotational moulding in conventional manner with a relatively narrow neck portion 6 in the top thereof (shown at one side in the diagram) and external locating ribs 7 on each side corresponding in position to, but spaced from, the ribs 2, the spacing being less than or equal to the desired outer wall thickness. An outlet pipe 8 is moulded into the inner hollow body and projects therefrom. The neck portion 6 of the inner body 5 is secured in the opening 3 in such a manner as to support the body 5 during the moulding process, while the outlet pipe 8 passes through and is held in a hole provided in the mould wall, so that the inner body 5 is supported at these two points and is held spaced from the surface of the mould at all other locations.

Polyethylene powder or microgranules is introduced into the space between the mould inner surface and the body 5, and the mould is then rotated about two axes while applying heat to the exterior thereof, so that the plastics material melts and coats all surfaces of the mould, gradually building up a uniform layer just thick enough to bridge the gaps between the ribs on the mould and those on the body 5 so as to bond the outer hollow body to the inner body at the ribs and to the neck portion 6. If foam filling is required plastics material with a blowing agent is introduced after the outer body has been formed, but before it has hardened fully, so as to bond the foam to the outer body and to the inner body. The mould is then gradually cooled while the rotation continues until the plastics material has solidified, the lid can then be removed from the mould to permit removal of the double-walled vessel therefrom.

It will be appreciated that the inner body may simply be formed with an opening therein, with the mould having a spigot portion which extends into the opening to locate the inner body in the mould and to permit moulding of the corresponding connected opening in the outer body.

Although the use of solid plastics materials is described, it will be appreciated that liquid materials can be used in a similar manner, the heat applied to the mould serving to cause curing of the materials, gradually building up the body of the plastics moulding.

The IBC shown in Figures 2, 3 and 4 is formed in the same general way as described with reference to Figure 1, but the inner body 20 is provided with a moulded outlet pipe 21 which is located in the mould in such a manner as to open through the outer body 22 when moulded, and also to serve to assist in supporting the body in the mould during moulding. The inner and outer bodies 20 and 22 are formed with an inlet 23 in the top thereof, which may be provided with a closure or lid 24. The underside of the IBC is shaped to provide supporting ribs 25 which are spaced so as to permit introduction therebetween of the forks of a fork-lift truck for convenience of handling of the IBC, and to confer additional strength and rigidity thereon. The base 26 of the inner body is shaped to direct material stored in the IBC towards the outlet pipe 21. The two bodies 20 and 22 are spaced apart by ribs 27 which serve to connect the walls together, the ribs on the outer body being moulded in the manner hereinbefore described with reference to Figure 1.

## Claims

1. A method of manufacturing a double-walled vessel comprising an outer body (22) and an inner body (20) connected thereto, wherein the or each opening (23, 21) into the interior of the inner body (20) is smaller than the maximum cross-sectional area of the body, the outer body (22) being moulded in such a manner as to be bonded to the inner body around the opening (23), the method comprising:
a) forming an inner hollow plastics body (20) with a plurality of external ribs extending from the surface thereof;
b) mounting the inner hollow body in a rotational mould (1) with the external surface of the inner body spaced from the internal surface of the mould; and
c) rotationally moulding a hollow plastics outer body (22) around, and spaced from the inner body (20) in such a manner as to join the inner and outer bodies together such that the inner surface of the outer body becomes bonded to the ribs,
**characterised in that** the vessel is of rectangular cross-section having adjacent to each corner thereof on each side thereof a pair of said ribs (27) extending longitudinally to enclose said corner therebetween.

2. A method of manufacturing a double-walled vessel comprising an outer body (22) and an inner body (20) connected thereto, wherein the or each opening (23) into the interior of the inner body (20) is smaller than the maximum cross-sectional area of the body, and the outer body (22) is moulded in such a manner as to be bonded to the inner body around the opening (23), the method comprising:
a) forming an inner hollow plastics body (20);
b) mounting the inner hollow body in a rotational mould (1) with the external surface of the inner body spaced from the internal surface of the mould; and
c) rotationally moulding a hollow plastics outer body (22) around, and spaced from the inner body (20),wherein the internal surface of the mould (1) is formed with a plurality of inwardly-directed ribs (2) and the outer body is moulded in such a manner that the outer body moulded thereon has inwardly-directed ribs (27) which are bonded to the outer surface of the inner body, **characterised in that** the vessel is of rectangular cross-section having adjacent to each corner thereof on each side thereof a pair of said ribs extending longitudinally to enclose said corner therebetween.

3. A method according to Claim 2, wherein the inner body (20) is formed with external ribs and the internal surface of the mould is formed with inwardly-directed ribs corresponding in position with at least some of the external ribs such that the outer body is moulded with inwardly-directed ribs joined to external ribs on the inner body.

4. A method according to Claim 1, 2 or 3, comprising rotationally moulding the inner body.

5. A method according to any preceding claim, which comprises forming an initial skin of plastics material on the surface of the mould, and then introducing into the space between the skin and the inner body plastics material containing a blowing agent, thereby providing expanded plastics material in said space bonded to the outer body.

6. A method of manufacturing a multi-walled vessel, comprising forming a double-walled vessel in accordance with a method according to any preceding claim, mounting the double-walled vessel in a rotational mould with the external surface of said vessel spaced from the internal surface of the mould, and rotationally moulding a hollow plastics outer body around, and spaced from, the double-walled vessel in such a manner as to bond the inner vessel and the outer body together at at least one predetermined location.

## Patentansprüche

1. Verfahren zur Herstellung eines doppelwandigen Behälters mit einem Außenkörper (22) und einem mit diesem verbundenen Innenkörper (20), bei dem eine bzw. jede Öffnung (23, 21) in das Innere des Innenkörpers (20) kleiner ist, als die maximale Querschnittsfläche des Körpers, wobei der Außenkörper (22) derart geformt ist, um mit dem Innenkörper um die Öffnung (23) herum verbunden zu werden, umfassend:
a) Formen eines inneren hohlen Kunststoffkörpers (20) mit einer Vielzahl von Außenrippen, die von der Oberfläche desselben abstehen;
b) Anordnen des inneren hohlen Körpers in einer Rotationsform (1), wobei die Außenwände des Innenkörpers von den Innenwänden der Form beabstandet sind; und
c) Rotationsformen eines hohlen Außenkörpers (22) aus Kunststoff um den Innenkörper (20) herum und von diesem beabstandet, um den Innenkörper und den Außenkörper miteinander zu verbinden, und zwar derart, dass die Innenwand des Außenkörpers mit den Rippen verbunden wird,
**dadurch gekennzeichnet, dass** der Behälter einen rechteckigen Querschnitt besitzt und im Bereich einer jeden Ecke an jeder Seite derselben ein Paar der genannten Rippen (27) aufweist, die längs verlaufen, um miteinander die jeweilige Ecke einzuschließen.

2. Verfahren zur Herstellung eines doppelwandigen Behälters mit einem Außenkörper (22) und einem mit diesem verbundenen Innenkörper (20), bei dem eine bzw. jede Öffnung (23) in das Innere des Innenkörpers (20) kleiner ist, als die maximale Querschnittsfläche des Körpers, wobei der Außenkörper (22) derart geformt ist, um mit dem Innenkörper um die Öffnung (23) herum verbunden zu werden, umfassend:
a) Formen eines inneren hohlen Kunststoffkörpers (20);
b) Anordnen des inneren hohlen Körpers in einer Rotationsform (1), wobei die Außenwände des Innenkörpers von den Innenwänden der Form beabstandet sind; und
c) Rotationsformen eines hohlen Außenkörpers (22) aus Kunststoff um den Innenkörper und von diesem beabstandet, wobei die Innenwand der Form (1) mit einer Vielzahl von einwärts gerichteten Rippen (2) versehen ist und der Außenkörper derart geformt wird, dass der Außenkörper nach innen gerichtete Rippen (27) ausbildet, welche mit der Außenwand des Innenkörpers verbunden werden, **dadurch gekennzeichnet, dass** der Behälter einen rechteckigen Querschnitt besitzt und im Bereich einer jeden Ecke an jeder Seite derselben ein Paar der genannten Rippen (27) aufweist, die längs verlaufen, um miteinander die jeweilige Ecke einzuschließen.

3. Verfahren nach Anspruch 2, bei dem der Innenkörper (20) mit Außenrippen und die Innenwand der Form mit nach innen gerichteten Rippen ausgebildet ist, die in ihrer Position zumindest einigen der Außenrippen entsprechen, derart, dass der Außenkörper mit nach innen gerichteten Rippen geformt wird, die mit den Außenrippen des inneren Körpers verbunden sind.

4. Verfahren nach Anspruch 1, 2 oder 3, bei dem der Innenkörper rotationsgeformt wird.

5. Verfahren nach einem der vorgenannten Ansprüche, welches weiterhin umfasst, eine erste Haut aus Kunststoffmaterial auf die Oberfläche der Form aufzubringen und dann in den Raum zwischen der Haut und dem Innenkörper ein Treibmittel enthaltendes Kunststoffmaterial einzubringen, wodurch in dem Raum ein aufgeblähtes Kunststoffmaterial bereitgestellt wird, das mit dem Außenkörper verbunden ist.

6. Verfahren zur Herstellung eines mehrwandigen Behälters, umfassend: Formen eines doppelwandigen Behälters nach einem Verfahren gemäß einem der vorgenannten Ansprüche, Anordnen des doppelwandigen Behälters in einer Rotationsform, wobei die Außenwand des Behälters von der Innenwand der Form beabstandet ist, und Rotationsformen eines hohlen Außenkörpers aus Kunststoff um den doppelwandigen Behälter herum und von diesem beabstandet, derart, dass der innere Behälter und der Außenkörper zumindest an einer vorgegebenen Stelle miteinander verbunden werden.

## Revendications

1. Procédé de fabrication d'un récipient à double paroi comprenant un corps externe (22) et un corps interne (20) connecté à celui-ci, dans lequel la ou chaque ouverture (23, 21) dans l'intérieur du corps interne (20) est inférieure à la surface maximale en coupe transversale du corps, le corps externe (22) étant moulé d'une manière telle qu'il est lié au corps interne autour de l'ouverture (23), le procédé comprenant les opérations consistant à :
(a) former un corps (20) en matière plastique, creux, interne, ayant une pluralité de nervures extérieures s'étendant à partir de la surface de celui-ci ;
(b) monter le corps creux interne dans un moule (1) pour moulage rotatif avec la surface externe du corps interne espacée de la surface interne du moule ; et
(c) mouler par moulage rotatif un corps externe (22) en matière plastique, creux, autour et espacé du corps interne (20) de façon à réunir ensemble les corps interne et externe de telle sorte que la surface interne du corps externe devienne liée aux nervures,
**caractérisé par le fait que** le récipient est de section transversale rectangulaire ayant, adjacente à chaque coin de celui-ci sur chaque côté de celui-ci, une paire desdites nervures (27) s'étendant longitudinalement pour enfermer ledit coin entre celles-ci.

2. Procédé de fabrication d'un récipient à double paroi comprenant un corps externe (22) et un corps interne (20) connecté à celui-ci, dans lequel la ou chaque ouverture (23) dans l'intérieur du corps interne (20) est inférieure à la surface en coupe transversale maximale du corps, et le corps externe (22) est moulé d'une manière telle qu'il est lié au corps interne autour de l'ouverture (23), le procédé comprenant les opérations consistant à :
(a) former un corps (20) en matière plastique, creux, interne ;
(b) monter le corps creux interne dans un moule (1) pour moulage rotatif avec la surface externe du corps interne espacée de la surface interne du moule ; et
(c) mouler par moulage rotatif un corps externe (22) en matière plastique, creux, autour et espacé du corps interne (20), la surface interne du moule (1) comportant une pluralité de nervures (2) dirigées vers l'intérieur et le corps externe étant moulé d'une manière telle que le corps externe moulé sur celle-ci a des nervures (27) dirigées vers l'intérieur qui sont liées à la surface externe du corps interne,
**caractérisé par le fait que** le récipient est de section transversale rectangulaire ayant, adjacente à chaque coin de celui-ci sur chaque côté de celui-ci, une paire desdites nervures s'étendant longitudinalement pour enfermer ledit coin entre celles-ci.

3. Procédé selon la revendication 2, dans lequel le corps interne (20) comporte des nervures externes et la surface interne du moule comporte des nervures dirigées vers l'intérieur correspondant en position avec au moins une partie des nervures externes de telle sorte que le corps externe est moulé avec des nervures dirigées vers l'intérieur réunies aux nervures externes sur le corps interne.

4. Procédé selon l'une des revendications 1, 2 ou 3, comprenant l'opération consistant à mouler le corps interne par moulage rotatif.

5. Procédé selon l'une quelconque des revendications précédentes, qui comprend les opérations consistant à former une peau initiale en matière plastique sur la surface du moule, puis à introduire dans l'espace entre la peau et le corps interne une matière plastique contenant un agent gonflant, fournissant de cette façon une matière plastique expansée dans ledit espace lié au corps externe.

6. Procédé de fabrication d'un récipient à paroi multiple, comprenant les opérations consistant à former un récipient à double paroi conformément à un procédé tel que défini à l'une quelconque des revendications précédentes, à monter le récipient à double paroi dans un moule pour moulage rotatif avec la surface externe dudit récipient espacée de la surface interne du moule, et à mouler par moulage rotatif un corps externe, en matière plastique, creux, autour et espacé du récipient à double paroi de façon à lier ensemble le récipient interne et le corps externe en au moins un emplacement prédéterminé.
